# EUROPEAN PATENT SPECIFICATION

(11) **EP 3 312 239 B1**
(45) Date of publication and mention of the grant of the patent: **11.11.2020**
(21) Application number: 16810901.5
(22) Date of filing: 27.05.2016
(51) Int. Cl.: C08L 69/00

(54) **POLYCARBONATE COMPOSITION AND PREPARATION METHOD THEREOF**
POLYCARBONATZUSAMMENSETZUNG UND HERSTELLUNGSVERFAHREN DAFÜR
COMPOSITION DE POLYCARBONATE ET SON PROCÉDÉ DE PRÉPARATION

(30) Priority: 18.06.2015 CN 201510340275
(43) Date of publication of application: 25.04.2018
(73) Proprietor: KINGFA SCI. & TECH. CO., LTD., Guangzhou, Guangdong 510663 (CN)
(72) Inventor: CEN, Yin, Guangzhou Guangdong 510663 (CN); SUN, Donghai, Guangzhou Guangdong 510663 (CN); HE, Jihui, Guangzhou Guangdong 510663 (CN); TONG, Wei, Guangzhou Guangdong 510663 (CN); XIE, Xiang, Guangzhou Guangdong 510663 (CN); XIE, Xiuhao, Guangzhou Guangdong 510663 (CN); TIAN, Zhengyu, Guangzhou Guangdong 510663 (CN); GUO, Tanghua, Guangzhou Guangdong 510663 (CN); DONG, Xiangmao, Guangzhou Guangdong 510663 (CN)
(74) Representative: Baudler, Ron
(86) International application number: PCT/CN2016/083635
(87) International publication number: WO 2016/202160

(56) References cited:
- WO-A1-00/77012
- CN-A- 101 418 118
- CN-A- 102 093 688
- CN-A- 102 352 096
- CN-A- 104 962 059
- JP-A- 2007 211 154
- US-A1- 2002 128 359

## Description

### TECHNICAL FIELD

The present invention relates to the technical field of engineering plastics, and particularly relates to a polycarbonate composition and a preparation method thereof.

### BACKGROUND

Polycarbonate PC has properties such as a relatively high impact resistance, a relatively high heat resistance and the like, and an oxygen index of the polycarbonate PC is relatively high. The polycarbonate PC itself has a certain fire proofing, can reach a V-2 rating of UL94 fire retardant ratings, and is widely used in industries such as an electronic and electricity, an office equipment and a mobile phone. In recent years, demands for minimization, light weight, thin-wall and non-halogenation are more and more urgent. In order to satisfying these demands, requirements for a fire retarding of a polycarbonate composition material are higher and higher, particularly a fire retarding rating of a thin product is required to reach V-0, the short the burning time, the better, and the smaller the smoke amount, the better.

At present, a fire retarding property of the polycarbonate may be improved by adding a fire retardant, such as a phosphate ester fire retardant, but an addition of this kind of fire retardant will reduce a heat resistance property of the polycarbonate. Therefore, in some occasions with relatively high requirements for an operating environment and under some requirements for rigorous processing conditions, an appearance, properties and fire retarding generally can't be balanced. US2002/128359 A1 discloses in example 5 a heat resistant polycarbonate composition comprising an excessively high amount of phosphorous-containing pre-polymer.

Until now, no influences of a content of a phosphorus-containing prepolymer and a fluorine-containing prepolymer on the heat resistance as well as a mechanical property and an appearance of the polycarbonate composition have been reported.

With a result of extensive experiments, the inventor surprisingly has found that, when a certain amount of the phosphorus-containing prepolymer and the fluorine-containing prepolymer is selected to be added in a polycarbonate composition formula, the heat resistance of the polycarbonate composition can be obviously improved, and meanwhile the polycarbonate composition can maintain a good mechanical property and a good appearance.

### SUMMARY OF THE INVENTION

In order to overcome disadvantages and shortcomings of the prior art, a primary object of the present invention is to provide a polycarbonate composition that has an obviously improved heat resistance and can maintain a good mechanical property and a good appearance.

Another object of the present invention is to provide a preparation method of the above-described polycarbonate composition.

The present invention is accomplished by following technical solution:
a polycarbonate composition, comprising following components in parts by weight:
   a. 50-70 parts of a polycarbonate;
   b. 8-30 parts of a terpolymer;
   c. 5-18 parts of a phosphate ester fire retardant;
   d. 0.1-1 parts of a phosphorus-containing prepolymer; and
   e. 0.1-4 parts of a fluorine-containing prepolymer;
wherein a sum of the parts by weight of the five components a, b, c, d and e is 100.

A test method of the phosphorus-containing prepolymer is: after composition particles are performed Soxhlet extraction at a temperature of 85 °C using an analytical pure grade methanol, 2 µL of a extraction solution is taken out and enters into a styrene absorption spectrum column at a certain flow rate, and a total content of the phosphorous-containing prepolymer in a system is calculated according to an integral area ratio of an efflux time and a total efflux time.

A test method of the fluorine-containing prepolymer is: the composition particles are placed into an Ar/O₂ gas flow at a temperature of 900 Celsius degree to be performed a burning treatment, and a generated gas is absorbed by an absorption liquid, quantifying by using an ion chromatography method (IC method).

When the content of the phosphorus-containing prepolymer exceeds 10 parts, it is not easy to form a uniform dispersion in the system, a smoke amount will not be controlled, a smoke releasing rate will conversely be accelerated, the smoke amount will increase, and meanwhile a problem of a surface appearance will be more easily resulted in.

When the parts by weight of the fluorine-containing prepolymer exceeds 10 parts, a modified composition will generate a stranded flowability because of a serious fiber forming, which will result in a difficulty processing and failure of smooth molding of a complicate product and a thin-wall product, and a thermal stability will be reduced at the same time.

In particular, the phosphorus-containing prepolymer is selected from a polymer of an aryl phosphate monomer with a molecular weight of 200 Dalton to 1000 Dalton and containing a (GO) 3P=O structure, and the aryl phosphate is selected from one or more of a bisphenol A-bis(diphenyl phosphate) dimer and a bisphenol A-bis(diphenyl phosphate) trimer.

In particular, the fluorine-containing prepolymer is selected from one or more of fluorinated ethylene, difluoroethylene, tetrafluoroethylene, hexafluoroethylene, a plymer of vinylidene fluoride, a copolymer of tetrafluoroethylene and hexafluoroethylene; preferably tetrafluoroethylene; wherein a degree of polymerization of the fluorine-containing prepolymer is less than or equal to 500 thousand and greater than 100 or equal to thousand.

In particular, the polycarbonate is selected from one or more of an aromatic polycarbonate, an aliphatic polycarbonate, an aromatic-aliphatic polycarbonate, a branched polycarbonate, and a siloxane copolycarbonate, preferably the aromatic polycarbonate.

Preferably, the aromatic polycarbonate is an aromatic polycarbonate with a viscosity-average molecular weight of 13000-40000, preferably the aromatic polycarbonate with the viscosity-average molecular weight of 16000-28000. When the viscosity-average molecular weight is within the above-described range, a mechanical strength is superior, and an excellent moldability can be maintained. Wherein, the viscosity-average molecular weight is calculated by testing a viscosity of a solution at 25 °C by using dichloromethane as a solvent.

The above-described polycarbonate may be prepared by an interfacial polymerization method and a transesterification method, and a content of a terminal hydroxyl group can be controlled in the process.

In particular, the terpolymer is selected from one or more of a terpolymer prepared by a bulk polymerization method, a terpolymer prepared by an emulsion polymerization method, and a terpolymer prepared by a bulk-suspension polymerization method.

The bulk polymerization method includes five steps: dissolving, prepolymerizing, polymerizing, devolatilizing and pelletizing, which more particularly are: dissolving a rubber in ethylbenzene and styrene; adding monomers in accordance with a formulation amount to prepare into a raw material solution, inputting the prepared raw material solution into a prepolymerizer to perform prepolymerization; during polymerizing, grafting the monomers to the rubber, copolymerizing the monomers at the same time, separating from the solution, forming a discontinuous phase dispersed in a continuous phase in the raw material solution, whereby after enough monomers are polymerized, a copolymer in the discontinuous phase becomes a continuous phase, and the grafted rubber forms a discontinuous phase, and the discontinuous phase is dispersed in the continuous copolymer phase, thereby accomplishing a phase transition; finally, performing further polymerization, vacuum degassing, extruding, cooling and pelletizing to obtain a final product.

The bulk-suspension polymerization method comprises: regulating a rubber and monomer solution in accordance with a formula, and adding a polymerization regulator and a radical initiator at the same time; performing bulk polymerization on a monomer mixture at 80 °C-120 °C, continuously stirring during polymerizing, and adding deionized water and a suspending agent into the mixture to ensure that the mixture is dispersed; and then performing suspension polymerization by using a radical catalyst, performing coagulating, filtering, washing, dehydrating and drying after obtaining a certain polymerization degree, and then pelletizing to obtain a product.

The emulsion polymerization method comprises: grafting a rubber by controlling a polymerization temperature at 50 °C-80 °C, and adding a monomer mixture into a rubber latex in the presence of an initiator, deionized water, an emulsifier and a cross-linking agent, and finally pelletizing after performing washing, dehydrating and drying to obtain a product.

In particular, the terpolymer is selected from graft copolymers containing following b.1 on b.2 in parts by weight:
b. 1 5-95 parts of a mixture of b. 1.1 and b.1.2:
b.1.1 50-95 parts of one or more of styrene, a styrene derivative such as α-methyl styrene, p-benzyl styrene, and divinyl styrene, a C1-C8 alkyl methacrylate, a C1-C8 alkyl acrylate, dimethyl siloxane, phenyl siloxane, and a multi-alkyl siloxane;
b.1.2 5-50 parts of one or more of acrylonitrile, methyl acrylonitrile, a C1-C8 alkyl methacrylate, and a C1-C8 alkyl acrylate; and
b.2 5-95 parts of one or more of a polybutadiene, a polyisoprene, a styrene-butadiene random copolymer and block copolymer, an acrylonitrile-butadiene random copolymer and block copolymer, a copolymer of a polybutadiene and a polyisoprene, a copolymer of ethylene and α-alkene, a copolymer of ethylene and an α-unsaturated carboxylate, an ethylene-propene-nonconjugated diene terpolymer, an acryloyl rubber, and an organic siloxane rubber.

Preferably, the terpolymer is selected from one or more of an acrylonitrile-styrene copolymer AS, an acrylonitrile-butadiene-styrene terpolymer ABS, a methyl methacrylate-acrylonitrile-butadiene-styrene copolymer MABS, an acrylonitrile-styrene-propenoic acid terpolymer ASA, and a methyl methacrylate-butadiene-styrene terpolymer MBS; preferably the acrylonitrile-butadiene-styrene terpolymer ABS and/or the methyl methacrylate-butadiene-styrene terpolymer MBS; wherein, a particle size of the MBS is preferably 0.1 µm to 0.5 µm, a particle size of the ABS in the bulk polymerization method is preferably 0.1 µm to 2 µm, and a particle size of the ABS in the emulsion polymerization method is preferably 0.05 µm to 0.2 µm.

In particular, the phosphate ester fire retardant is selected from one or more of triphenyl phosphate, tritolyl phosphate, cresyl diphenyl phosphate, trixylyl phosphate, tris(2,4,6-trimethylphenyl) phosphate, tris(2,4-di-tert-butylphenyl) phosphate, tris(2,6-di-tert-butylphenyl) phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).

The polycarbonate composition may further comprise other aids; and the other aid is selected from one or more of a stabilizer, an antioxidant, a fire retarding synergist, a lubricant, a plasticizer, a filler, and a colorant.

The suitable stabilizer includes an organic phosphite such as triphenyl phosphite, tris(2,6-dimethylphenyl) phosphite, tris(nonylphenyl) phosphite, dimethylphenyl phosphonate, and trimethyl phosphate, one or more combinations of an organic phosphite, an alkylated monophenol or polyphenol, an alkylated reaction product of a polyphenol and a diene, a butylated reaction product of p-cresol or dicyclopentadiene, alkylated hydroquinones, hydroxylated thiodiphenyl ethers, alkylene-bisphenol, a benzyl compound, polyol esters, benztriazoles, and benzophenones.

The suitable antioxidant includes a phenol type antioxidant, and more specifically is 2,6-di-tert-butyl-4-methylphenol, n-octadecyl-3-(3,5-di-tert-butyl-4-hydroxyphenyl) propionate, tetrakis(methylene-3-(3,5-di-tert-butyl-4-hydroxyphenyl) propionate) methane, tris(3,5-di-tert-butyl-4-hydroxybenzyl) isocyanate, 4,4-butylidenebis(3-methyl-6-tert-butylphenol), triethylene glycol-bis(3-(3-tert-butyl-hydroxy-5-methylbenzyl)) propionate, and 3,9-bis(2-(3-(3-tert-butyl-4-hydroxy-5-methylphenyl)propionyloxy-1,11-dimethylphenyl)-2,4,8,10-tetraoxaspiro(5,5)undecane.

The suitable fire retarding synergist includes an inorganic filler, such as a metallic oxide, a carbonate, a phosphate, a silicate, a sulfide, a slicon-containing substance, specifically for example titanium dioxide, a talcum powder, a hydrotalcite, barium sulfate, calcium carbonate, zinc sulfide, a wollastonite, a siloxane, and a silicone.

The suitable lubricant includes an aliphatic monocarboxylic acid, a dicarboxylic acid or a tricarboxylic acid, specifically such as palmitic acid, stearic acid, valeric acid, caproic acid, canoic acid, decanoic acid, eicosanoic acid, docosanoic acid, tetracosanoic acid, hexacosanoic acid, triacontanoic acid, tetratriacontanic acid, montanic acid, glutaric acid, adipic acid, azelaic acid and the like.

The suitable plasticizer is phthalate.

The suitable filler includes various kinds of columnar, spherical, needlelike and irregular fillers such as a glass fiber, a carbon fiber, a cotton fiber, a metal, and a metal compound.

The suitable colorant includes various pigments, and dyes.

A preparation method of the above-described polycarbonate composition comprises following steps:
after weighing a polycarbonate, a terpolymer, a phosphate ester fire retardant, a phosphorus-containing prepolymer, a fluorine-containing prepolymer, and other aids in proportion, blending by a high-speed mixer or a mixer, extruding, cooling by means of water, and pelletizing to obtain a columnar particulate polycarbonate composition.

Compared with the prior art, the present invention has the following advantageous effects:
according to the present invention, when a certain amount of the phosphorus-containing prepolymer and the fluorine-containing prepolymer is selected to be added in a polycarbonate composition formula, a heat resistance of the polycarbonate composition can be obviously improved, and meanwhile the polycarbonate composition can maintain a good mechanical property and a good appearance.

### DETAILED DESCRIPTION OF THE PREFERRED EMBODIMENT

The present invention will be further described below by specific implementations, the following embodiments are preferred implementations of the present invention, but the implementations of the present invention are not limited by the following embodiments.

Testing standards or methods of various properties:
a test method of a heat resistance: an 80 ton injection molding machine manufactured by Dainichiseika Resin Mfg. Co., Ltd. was used, a polycarbonate composition was stuck for 5 minutes while a barrel temperature was 280 °C, a viscosity-average molecular weight before and after injection was measured, and a stability of the composition was evaluated. The smaller the absolute value of a difference between "the viscosity-average molecular weight before injection" and "the viscosity-average molecular weight after injection", the more preferred. Herein, when the absolute value of the difference is less than 2000, the heat resistance was evaluated as "good (G)", when the absolute value of the difference is greater than or equal to 5000 and less than 10000, the heat resistance was evaluated as "medium (M)", and when the absolute value of the difference is greater than or equal to 10000, the heat resistance was evaluated as "not good (NG)".

A test method of 2.0 mm fire retarding: UL 94: a strip spline with a thickness of 1.5 mm, a length of 125 mm and a width of 13 mm was injected and molded, V-0, V-1 and V-2 ratings were determined according to an evaluate method of a vertical burning flame time and a drip ignition phenomenon.

A test method of a smoke amount: an 80 ton injection molding machine manufactured by Dainichiseika Resin Mfg. Co., Ltd. was used to inject a 4mm×100mm×100mm sample piece with a intact appearance and a uniform material under a barrel temperature of 280 °C, the sample piece was burned in a balance, after disposing RSR date curves of burning, a dynamic burning behavior was comprehensively evaluated by a smoke producing rate (SPR), a total smoke producing amount (TSP), a smoke parameter (SP), and a smoke factor (SF), a evaluate means was with a consequence of large, medium, small.

A test method of an appearance: an 80 ton injection molding machine manufactured by Dainichiseika Resin Mfg. Co., Ltd. was used, which was stuck for 5 minutes while a barrel temperature was 280 °C, a 2mm×100mm×100mm sample piece was injected, and a stability of the composition was evaluated by observing a surface situation of the sample piece. Herein, a composition without any spray, silver streak or pitting, was evaluated as "good (G)"; a composition having slight pitting or having spray and silver streak whose length was less than 1 mm, was evaluated as "medium (M)"; and a composition having serious pitting with a large quantity and a length greater than 1 mm, was evaluated as "not good (NG)".

A test method of a phosphorus-containing prepolymer: after composition particles were performed Soxhlet extraction at a temperature of 85 °C using an analytical pure grade methanol, 2 µL of a extraction solution was taken out and entered into a styrene absorption spectrum column, and a total content of the phosphorous-containing prepolymer in a system was calculated according to an integral area ratio of an efflux time and a total efflux time.

A test method of a fluorine-containing prepolymer: the composition particles are placed into an Ar/O₂ gas flow at a temperature of 900 Celsius degree to be performed a burning treatment, and a generated gas was absorbed by an absorption liquid, quantifying by using an ion chromatography method (IC method).

A polycarbonate used in the present invention:
a component a-1: PC 1300-10 (LG, Korea); and
a component a-2: PC 1225 (Teijin, Japan).

A terpolymer used in the present invention:
a component b-1: ABS1 Emulsion method 757 (Chi Mei, Taiwan); and
a component b-2: MBS EM500 (LG, Korea).

A phosphate ester fire retardant used in the present invention:
a component c: BDP, bisphenol A-bis(diphenyl phosphate) (ADEKA).

A phosphorus-containing prepolymer used in the present invention:
a component d-1: bisphenol A-bis(diphenyl phosphate) dimer (ADEKA); and
a component d-2: bisphenol A-bis(diphenyl phosphate) trimer (ADEKA).

A fluorine-containing prepolymer used in the present invention:
a component e-1: tetrafluoroethylene prepolymer, with a degree of polymerization of 200000 (3M, America); and
a component e-2: vinylidene fluoride prepolymer, with a degree of polymerization of 200000 (3M, America).

Other aids used in the present invention comprise:
a component f-1: AO1076 (octadecyl-3-(3,5-di-tert-butyl-4-hydroxyphenyl)propionate), as an antioxidant; and
a component f-2: pep-36 (phosphite) as a stabilizer.

### Embodiments 1-15 and Comparative Examples 1-9: Preparation of Polycarbonate Compositions

After the polycarbonate, the terpolymer, the phosphate ester fire retardant, the phosphorus-containing prepolymer, the fluorine-containing prepolymer, and other aids were weighed in proportion in accordance with formulas in Table 1, they were blending by a high-speed mixer or a mixer, extruding, cooling by means of water, and pelletizing to obtain a columnar particulate polycarbonate composition. The heat resistance, the fire retarding, the smoke appearance, and the appearance of the polycarbonate composition were tested, and the data were listed in Table 1.

**Table 1 Specific proportion (parts by weight) and other property testing results in Embodiments 1-15 and Comparative Examples 1-9**

| | Embodiment 1 | Embodimen t 2 | Embodiment 3 | Embodiment 4 | Embodiment 5 | Embodiment 6 | Embodiment 7 | Embodiment 8 | Embodiment 9 | Embodiment 10 | Embodiment 11 | Embodiment 12 | Embodiment 13 | Embodiment 14 | Embodiment 15 |
|---|---|---|---|---|---|---|---|---|---|---|---|---|---|---|---|
| component a-1 | 30 | 60 | 85 | | | | 30 | | 85 | 50 | 50 | 50 | 70 | 70 | 70 |
| component a-2 | | | | 30 | 60 | 85 | | 60 | | | | | | | |
| component b-1 | 38 | 12 | 8.4 | | | | 38 | | 8.4 | 35 | 35 | 35 | 10 | 10 | 10 |
| component b-2 | | | | 38 | 12 | 8.4 | | 12 | | | | | | | |
| component c | 25 | 18 | 5 | 25 | 18 | 5 | 25 | 18 | 5 | 10 | 10 | 10 | 10 | 10 | 10 |
| component d | 5.9 7 | 3 | 0.57 | 5.95 | 4 | 0.52 | 5.9 | 5 | 0.4 | 0.1 | 1.5 | 1 | 1 | 5 | 3 |
| component e-1 | 0.0 3 | | 0.03 | 0.05 | | 0.08 | 0.1 | | 0.2 | 3.9 | 2.5 | 3 | 8 | 4 | 6 |
| component e-2 | | 6 | | | 5 | | | 4 | | | | | | | |
| component f-1 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| component f-2 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| heat resistance | M | M | G | M | G | G | G | G | G | G | M | G | G | G | M |
| UL94 2.0 mm | V-0 | V-0 | V-0 | V-0 | V-0 | V-0 | V-0 | V-0 | V-0 | V-0 | V-0 | V-0 | V-0 | V-0 | V-0 |
| smoke amount | medium | medium | sma II | medium | sma II | sma II | sma II | sma II | sma II | sma II | medium | sma II | sma II | sma II | medium |
| appearance | M | M | G | M | G | G | G | G | G | G | M | G | G | G | M |

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | | | | | | |
|---|---|---|---|---|---|---|---|---|---|---|---|---|---|---|---|
| component a-1 | 30 | 60 | 85 | | | | 30 | | 85 | | | | | | |
| component a-2 | | | | 30 | 60 | 85 | | 60 | | | | | | | |
| component b-1 | 17 | 20.7 | 8.8 | | | | 8 | | 11 | | | | | | |
| component b-2 | | | | 29 | 8 | 9 | | 19 | | | | | | | |
| component c | 25 | 18 | 5 | 25 | 18 | 5 | 25 | 18 | 5 | | | | | | |
| component d | 12 | 0 | 0.1 | 0 | 13 | 0 | 22 | 0 | 3 | | | | | | |
| component e-1 | 15 | 0.3 | 0 | | 0 | 0 | | 0 | 0 | | | | | | |
| component e-2 | | | | 15 | | | 14 | | | | | | | | |
| component f-1 | 0.5 | 0.5 | 0.5 | 0.5 | 0.5 | 0.5 | 0.5 | 0.5 | 0.5 | | | | | | |
| component f-2 | 0.5 | 0.5 | 0.5 | 0.5 | 0.5 | 0.5 | 0.5 | 0.5 | 0.5 | | | | | | |
| heat resistance | NG | NG | NG | NG | NG | NG | NG | NG | NG | | | | | | |
| UL94 2.0 mm | V-1 | V-1 | V-1 | V-1 | V-1 | V-1 | V-1 | V-2 | V-2 | | | | | | |
| smoke amount | large | large | large | large | large | large | large | large | large | | | | | | |
| appearance | NG | NG | NG | NG | NG | NG | NG | NG | NG | | | | | | |

It may be seen from a comparison of Embodiments with Comparative Examples in Table 1 that, when a certain amount of the phosphorus-containing prepolymer and the fluorine-containing prepolymer is selected to be added in a polycarbonate composition formula, the heat resistance of the polycarbonate composition can be obviously improved, and meanwhile the polycarbonate composition can maintain a good mechanical property and a good appearance.

## Claims

1. A polycarbonate composition, comprising following components in parts by weight:
a. 50-70 parts of a polycarbonate;
b. 8-30 parts of a terpolymer;
c. 5-18 parts of a phosphate ester fire retardant;
d. 0.1-1 parts of a phosphorus-containing prepolymer; and
e. 0.1-4 parts of a fluorine-containing prepolymer;
wherein a sum of the parts by weight of the five components a, b, c, d and e is 100, and
wherein the phosphorus-containing prepolymer is selected from a polymer of an aryl phosphate monomer with a molecular weight of 200 Dalton to 1000 Dalton and containing a (GO) 3P=O structure, wherein the aryl phosphate is selected from one or more of a bisphenol A-bis(diphenyl phosphate) dimer and a bisphenol A-bis(diphenyl phosphate) trimer.

2. The polycarbonate composition according to claim 1, wherein the fluorine-containing prepolymer is selected from one or more of fluorinated ethylene, difluoroethylene, tetrafluoroethylene, hexafluoroethylene, a polymer of vinylidene fluoride, and a copolymer of tetrafluoroethylene and hexafluoroethylene; preferably tetrafluoroethylene; wherein a degree of polymerization of the fluorine-containing prepolymer is less than or equal to 500 thousand and greater than or equal to 100 thousand.

3. The polycarbonate composition according to claim 1, wherein the polycarbonate is selected from one or more of an aromatic polycarbonate, an aliphatic polycarbonate, an aromatic-aliphatic polycarbonate, a branched polycarbonate, and a siloxane copolycarbonate; preferably the aromatic polycarbonate; the aromatic polycarbonate is an aromatic polycarbonate with a viscosity-average molecular weight of 13000-40000, preferably the aromatic polycarbonate with the viscosity-average molecular weight of 16.000 - 28.000 as determined by the method given in the description.

4. The polycarbonate composition according to claim 1, wherein the terpolymer is selected from one or more of a terpolymer prepared by a bulk polymerization method, a terpolymer prepared by an emulsion polymerization method, and a terpolymer prepared by a bulk-suspension polymerization method.

5. The polycarbonate composition according to claim 1, wherein the terpolymer is selected from graft copolymers containing following b.1 on b.2 in parts by weight:
b. 1 5-95 parts of a mixture of b. 1.1 and b.1.2:
b.1.1 50-95 parts of one or more of styrene, a styrene derivative such as α-methyl styrene, p-benzyl styrene, and divinyl styrene, a C1-C8 alkyl methacrylate, a C1-C8 alkyl acrylate, dimethyl siloxane, phenyl siloxane, and a multi-alkyl siloxane;
b.1.2 5-50 parts of one or more of acrylonitrile, methyl acrylonitrile, a C1-C8 alkyl methacrylate, and a C1-C8 alkyl acrylate; and
b.2 5-95 parts of one or more of a polybutadiene, a polyisoprene, a styrene-butadiene random copolymer and block copolymer, an acrylonitrile-butadiene random copolymer and block copolymer, a copolymer of a polybutadiene and a polyisoprene, a copolymer of ethylene and α-alkene, a copolymer of ethylene and an α-unsaturated carboxylate, an ethylene-propene-nonconjugated diene terpolymer, an acryloyl rubber, and an organic siloxane rubber.

6. The polycarbonate composition according to claim 5, wherein the terpolymer is selected from one or more of an acrylonitrile-styrene copolymer AS, an acrylonitrile-butadiene-styrene terpolymer ABS, a methyl methacrylate-acrylonitrile-butadiene-styrene copolymer MABS, an acrylonitrile-styrene-propenoic acid terpolymer ASA, and a methyl methacrylate-butadiene-styrene terpolymer MBS; preferably the acrylonitrile-butadiene-styrene terpolymer ABS and/or the methyl methacrylate-butadiene-styrene terpolymer MBS; wherein, a particle size of the MBS is preferably 0.1 µm to 0.5 µm, a particle size of the ABS in the bulk polymerization method is preferably 0.1 µm to 2 µm, and a particle size of the ABS in the emulsion polymerization method is preferably 0.05 µm to 0.2 µm.

7. The polycarbonate composition according to claim 1, wherein the phosphate ester fire retardant is selected from one or more of triphenyl phosphate, tritolyl phosphate, cresyl diphenyl phosphate, trixylyl phosphate, tris(2,4,6-trimethylphenyl) phosphate, tris(2,4-di-tert-butylphenyl) phosphate, tris(2,6-di-tert-butylphenyl) phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).

8. The polycarbonate composition according to claim 1, wherein the polycarbonate composition further contains other aids; and the other aid is selected from one or more of a stabilizer, an antioxidant, a fire retarding synergist, a lubricant, a plasticizer, a filler, and a colorant.

9. A preparation method of the polycarbonate composition according to any of claims 1 to 8, **characterized in that**, the preparation method includes following steps:
after weighing a polycarbonate, a terpolymer, a phosphate ester fire retardant, a phosphorus-containing prepolymer, a fluorine-containing prepolymer, and other aids in proportion, blending by a high-speed mixer or a mixer, extruding, cooling by means of water, and pelletizing to obtain a columnar particulate polycarbonate composition.

## Patentansprüche

1. Polycarbonatzusammensetzung, umfassend folgende Bestandteile nach Gewichtsteilen:
a. 50 bis 70 Teile eines Polycarbonats;
b. 8 bis 30 Teile eines Terpolymers;
c. 5 bis 18 Teile eines Phosphatester-Flammhemmmittels;
d. 0,1 bis 1 Teile eines phosphorhaltigen Vorpolymers; und
e. 0,1 bis 4 Teile eines fluorhaltigen Vorpolymers;
wobei eine Summe der Gewichtsteile der fünf Bestandteile a, b, c, d und e 100 beträgt, und
wobei das phosphorhaltige Vorpolymer gewählt ist aus einem Polymer eines Arylphosphat-Monomers mit einem Molekulargewicht von 200 Dalton bis 1000 Dalton und enthaltend eine (GO) 3P=O-Struktur, wobei das Arylphosphat gewählt ist aus einem oder mehreren von einem Bisphenol-A-bis(diphenylphosphat)-Dimer und einem Bisphenol-A-bis(diphenylphosphat)-Trimer.

2. Polycarbonatzusammensetzung nach Anspruch 1, wobei das fluorhaltige Vorpolymer gewählt ist aus einem oder mehreren von fluoriertem Ethylen, Difluorethylen, Tetrafluorethylen, Hexafluorethylen, einem Polymer von Vinylidenfluorid und einem Copolymer von Tetrafluorethylen und Hexafluorethylen; vorzugsweise Tetrafluorethylen; wobei ein Polymerisationsgrad des fluorhaltigen Vorpolymers weniger oder gleich 500-tausend und mehr oder gleich 100-tausend beträgt.

3. Polycarbonatzusammensetzung nach Anspruch 1, wobei das Polycarbonat gewählt ist aus einem oder mehreren von einem aromatischen Polycarbonat, einem aliphatischen Polycarbonat, einem aromatisch-aliphatischen Polycarbonat, einem verzweigten Polycarbonat und einem Siloxan-Copolycarbonat; vorzugsweise dem aromatischen Polycarbonat; das aromatische Polycarbonat ist ein aromatisches Polycarbonat mit einem durch die Viskosität bestimmten durchschnittlichen Molekulargewicht von 13000 bis 40000, vorzugsweise das aromatische Polycarbonat mit einem durch die Viskosität bestimmten durchschnittlichen Molekulargewicht von 16000-28000, wie nach dem in der Beschreibung gegebenen Verfahren bestimmt.

4. Polycarbonatzusammensetzung nach Anspruch 1, wobei das Terpolymer gewählt ist aus einem oder mehreren von einem Terpolymer, das nach einem Substanzpolymerisationsverfahren aufbereitet ist, einem Terpolymer, das nach einem Emulsionspolymerisationsverfahren aufbereitet ist, und einem Terpolymer, das nach einem Substanzsuspensionspolymerisationsverfahren aufbereitet ist.

5. Polycarbonatzusammensetzung nach Anspruch 1, wobei das Terpolymer gewählt ist aus Pfropf-Copolymeren, enthaltend folgende b.1 auf b.2 in Gewichtsteilen:
b.1 5 bis 95 Teile eines Gemisches von b.1.1 und b.1.2:
b.1.1 50 bis 95 Teile von einem oder mehreren von Styrol, einem Styrolderivat, wie etwa α-Methylstyrol, p-Benzylstyrol und Divinylstyrol, einem C1-C8-Alkylmethacrylat, einem C1-C8-Alkylacrylat, Dimethylsiloxan, Phenylsiloxan und einem Multi-Alkylsiloxan;
b.1.2 5 bis 50 Teile von einem oder mehreren von Acrylnitril, Methylacrylnitril, einem C1-C8-Alkylmethacrylat und einem C1-C8-Alkylacrylat; und
b.2 5-95 Teile von einem oder mehreren von einem Polybutadien, einem Polyisopren, einem Styrol-Butadien-Random-Copolymer und - Block-Copolymer, einem Acrylnitril-Butadien-Random-Copolymer und - Block-Copolymer, einem Copolymer eines Polybutadiens und eines Polyisoprens, einem Copolymer von Ethylen und α-Alken, einem Copolymer von Ethylen und einem α-ungesättigten Carboxylat, einem Ethylen-Propen-nichtkonjugierten Dien-Terpolymer, einem Acryloylkautschuk und einem organischen Siloxankautschuk.

6. Polycarbonatzusammensetzung nach Anspruch 5, wobei das Terpolymer gewählt ist aus einem oder mehreren von einem Acrylnitril-Styrol-Copolymer AS, einem Acrylnitril-Butadien-Styrol-Terpolymer ABS, einem Methylmethacrylat-Acrylnitril-Butadien-Styrol-Copolymer MABS, einem Acrylnitril-Styrol-Propensäure-Terpolymer ASA und einem Methylmethacrylat-Butadien-Styrol-Copolymer MBS; vorzugsweise dem Acrylnitril-Butadien-Styrol-Terpolymer ABS und/oder dem Methylmethacrylat-Butadien-Styrol-Copolymer MBS; wobei eine Teilchengröße des MBS vorzugsweise 0,1 µm bis 0,5 µm beträgt, eine Teilchengröße des ABS beim Substanzpolymerisationsverfahren vorzugsweise 0,1 µm bis 2 µm beträgt und eine Teilchengröße des ABS beim Emulsionspolymerisationsverfahren vorzugsweise 0,05 µm bis 0,2 µm beträgt.

7. Polycarbonatzusammensetzung nach Anspruch 1, wobei das Phosphatester-Flammhemmmittel gewählt ist aus einem oder mehreren von Triphenylphosphat, Tritolylphosphat, Cresyldiphenylphosphat, Trixylylphosphat, tris(2,4,6-trimethylphenyl)-Phosphat, tris(2,4-di-tert-butylphenyl)-Phosphat, tris(2,6-di-tert-butylphenyl)-Phosphat, Resorcinol-bis(diphenylphosphat), Hydrochinon-bis(diphenylphosphat), Bisphenol-A-bis(diphenylphosphat), Resorcinol-bis(2,6-di-tert-butylphenylphosphat) und Hydrochinon-bis(2,6-dimethylphenylphosphat).

8. Polycarbonatzusammensetzung nach Anspruch 1, wobei die Polycarbonatzusammensetzung weiter andere Hilfsstoffe enthält; und der andere Hilfsstoff gewählt ist aus einem oder mehreren von einem Stabilisator, einem Antioxidans, einem flammhemmenden Synergisten, einem Schmiermittel, einem Plastifikator, einem Füllstoff und einem Farbstoff.

9. Aufbereitungsverfahren der Polycarbonatzusammensetzung nach beliebigen der Ansprüche 1 bis 8, **dadurch gekennzeichnet, dass** das Aufbereitungsverfahren die folgenden Schritte enthält:
nach dem Abwiegen eines Polycarbonats, eines Terpolymers, eines Phosphatester-Flammhemmmittels, eines phosphorhaltigen Vorpolymers, eines fluorhaltigen Vorpolymers und anderer Hilfsstoffe im Verhältnis ein Vermischen in einem Schnellmischer oder Mischer, ein Extrudieren, ein Kühlen mittels Wasser und ein Pelletieren, um eine Polycarbonatzusammensetzung in säulenartiger Teilchenform zu erhalten.

## Revendications

1. Composition de polycarbonate, comprenant les composants suivants en parties en poids :
a. 50-70 parties d'un polycarbonate ;
b. 8-30 parties d'un terpolymère ;
c. 5-18 parties d'un retardateur de flamme esterphosphorique ;
d. 0,1-1 partie d'un prépolymère contenant du phosphore ; et
e. 0,1-4 parties d'un prépolymère contenant du fluor ;
dans laquelle une somme des parties en poids des cinq composants a, b, c, d et e est 100 et
dans laquelle le prépolymère contenant du phosphore est choisi parmi un polymère d'un monomère phosphate d'aryle ayant une masse moléculaire de 200 daltons à 1 000 daltons et contenant une structure (GO) 3P=O, dans laquelle le phosphate d'aryle est choisi parmi un ou plusieurs d'un dimère de bis(diphénylphosphate) de bisphénol A et d'un trimère de bis(diphénylphosphate) de bisphénol A.

2. Composition de polycarbonate selon la revendication 1, dans laquelle le prépolymère contenant du fluor est choisi parmi un ou plusieurs parmi l'éthylène fluoré, le difluoroéthylène, le tétrafluoroéthylène, l'hexafluoroéthylène, un polymère de fluorure de vinylidène et un copolymère de tétrafluoroéthylène et d'hexafluoroéthylène ; de préférence le tétrafluoroéthylène ; dans laquelle un degré de polymérisation du prépolymère contenant du fluor est inférieur ou égal à 500 mille et supérieur ou égal à 100 mille.

3. Composition de polycarbonate selon la revendication 1, dans laquelle le polycarbonate est choisi parmi un ou plusieurs parmi un polycarbonate aromatique, un polycarbonate aliphatique, un polycarbonate aromatique-aliphatique, un polycarbonate ramifié et un copolycarbonate de siloxane ; de préférence le polycarbonate aromatique ; le polycarbonate aromatique est un polycarbonate aromatique avec une masse moléculaire viscosimétrique de 13 000-40 000, de préférence le polycarbonate aromatique avec la masse moléculaire viscosimétrique de 16 000-28 000 comme déterminée par la méthode donnée dans la description.

4. Composition de polycarbonate selon la revendication 1, dans laquelle le terpolymère est choisi parmi un ou plusieurs parmi un terpolymère préparé par un procédé de polymérisation en masse, un terpolymère préparé par un procédé de polymérisation en émulsion et un terpolymère préparé par un procédé de polymérisation en masse en suspension.

5. Composition de polycarbonate selon la revendication 1, dans laquelle le terpolymère est choisi parmi les copolymères greffés contenant les constituants suivants b.1 sur b.2 en parties en poids :
b.1 5-95 parties d'un mélange de b.1.1 et b.1.2 :
b.1.1 50 à 95 parties d'un ou de plusieurs parmi le styrène, un dérivé du styrène tel que α-méthylstyrène, p-benzyl-styrène et divinylstyrène, un méthacrylate d'alkyle en C1-C8, un acrylate d'alkyle en C1-C8, le diméthylsiloxane, le phénylsiloxane et un siloxane multi-alkylique ;
b.1.2 5-50 parties d'un ou de plusieurs parmi l'acrylonitrile, le méthacrylonitrile, un méthacrylate d'alkyle en C1-C8 et un acrylate d'alkyle en C1-C8 ; et
b.2 5 à 95 parties d'un ou de plusieurs parmi un polybutadiène, un polyisoprène, un copolymère statistique et un copolymère séquencé de styrène-butadiène, un copolymère statistique et un copolymère séquencé d'acrylonitrile-butadiène, un copolymère d'un polybutadiène et d'un polyisoprène, un copolymère d'éthylène et d'a-alcène, un copolymère d'éthylène et d'un carboxylate α-insaturé, un terpolymère d'éthylène-propène-diène non conjugué, un caoutchouc acryloyle et un caoutchouc siloxane organique.

6. Composition de polycarbonate selon la revendication 5, dans laquelle le terpolymère est choisi parmi un ou plusieurs parmi un copolymère acrylonitrile-styrène AS, un terpolymère acrylonitrile-butadiène-styrène ABS, un copolymère méthacrylate de méthyle-acrylonitrile-butadiène-styrène MABS, un terpolymère acrylonitrile-styrène-acide propénoïque ASA et un terpolymère méthacrylate de méthyle-butadiène-styrène MBS ; de préférence le terpolymère acrylonitrile-butadiène-styrène ABS et/ou le terpolymère méthacrylate de méthyle-butadiène-styrène MBS ; dans laquelle, une taille de particule du MBS est de préférence de 0,1 µm à 0,5 µm, une taille de particule de l'ABS dans le procédé de polymérisation en masse est de préférence de 0,1 µm à 2 µm et une taille de particule de l'ABS dans le procédé de polymérisation en émulsion est de préférence de 0,05 µm à 0,2 µm.

7. Composition de polycarbonate selon la revendication 1, dans laquelle le retardateur de flamme esterphosphorique est choisi parmi un ou plusieurs parmi le phosphate de triphényle, le phosphate de tritolyle, le phosphate de crésyle et de diphényle, le phosphate de trixylyle, le phosphate de tris(2,4,6-triméthylphényle), le phosphate de tris(2,4-di-ter-butylphényle), le phosphate de tris(2,6-di-tert-butylphényle), le bis(diphénylphosphate) de résorcinol, le bis(diphénylphosphate) d'hydroquinone, le bis(diphénylphosphate) de bisphénol A, le bis(2,6-di-tert-butylphénylphosphate) de résorcinol et le bis(2,6-diméthylphénylphosphate) d'hydroquinone.

8. Composition de polycarbonate selon la revendication 1, dans laquelle la composition de polycarbonate contient en outre d'autres adjuvants ; et l'autre adjuvant est choisi parmi un ou plusieurs parmi un stabilisant, un antioxydant, un agent synergique retardateur de flamme, un lubrifiant, un plastifiant, une charge et un colorant.

9. Procédé de préparation de la composition de polycarbonate selon l'une quelconque des revendications 1 à 8, **caractérisé en ce que** le procédé de préparation comprend les étapes suivantes :
après pesée d'un polycarbonate, d'un terpolymère, d'un retardateur de flamme esterphosphorique, d'un prépolymère contenant du phosphore, d'un prépolymère contenant du fluor et d'autres adjuvants en proportion, mélanger par un mélangeur à grande vitesse ou un malaxeur, extruder, refroidir au moyen d'eau et granuler pour obtenir une composition de polycarbonate particulaire colonnaire.
